# EUROPEAN PATENT SPECIFICATION

(11) **EP 0 712 200 B1**
(45) Date of publication and mention of the grant of the patent: **24.10.2001**
(21) Application number: 95308075.1
(22) Date of filing: 10.11.1995
(51) Int. Cl.: H02M 3/335, H01R 13/66, H01R 13/703, H01R 24/04

(54) **Power supply outlet**
Steckdoseneinheit für Stromversorgung
Bloc de prise d'une alimentation de puissance

(30) Priority: 10.11.1994 US 337591
(43) Date of publication of application: 15.05.1996
(73) Proprietor: HYUNDAI ELECTRONICS AMERICA, Milpitas, California 95035 (US)
(72) Inventor: Chen, Dao-Long, Fort Collins, CO 80525 (US); Ellsworth, Daniel L., Fort Collins, CO 80524 (US)
(74) Representative: Gill, David Alan

(56) References cited:
- EP-A- 0 409 226
- WO-A-95/33288
- DE-A- 3 110 005
- US-A- 4 915 639
- US-A- 5 281 154
- PATENT ABSTRACTS OF JAPAN vol. 95, no. 001 & JP-A-07 015835 (MATSUSHITA SEIKO CO LTD), 17 January 1995,

## Description

The present invention relates to a power supply outlet.

In many electronic appliances and devices (e.g. electronic clocks, radios, CD players, computers, video games, etc.), the bulkiest part or component is the power supply arrangement which, traditionally, requires a large and heavy isolation transformer and, sometimes, a heat sink and a cooling fan. The power supply arrangement serves to convert the AC voltage from the mains outlet to a DC voltage that can be used by the system. For some systems that do not have a built-in power supply arrangement (e.g. portable computers), an external AC-to-DC adapter is needed to operate the systems from a mains outlet.

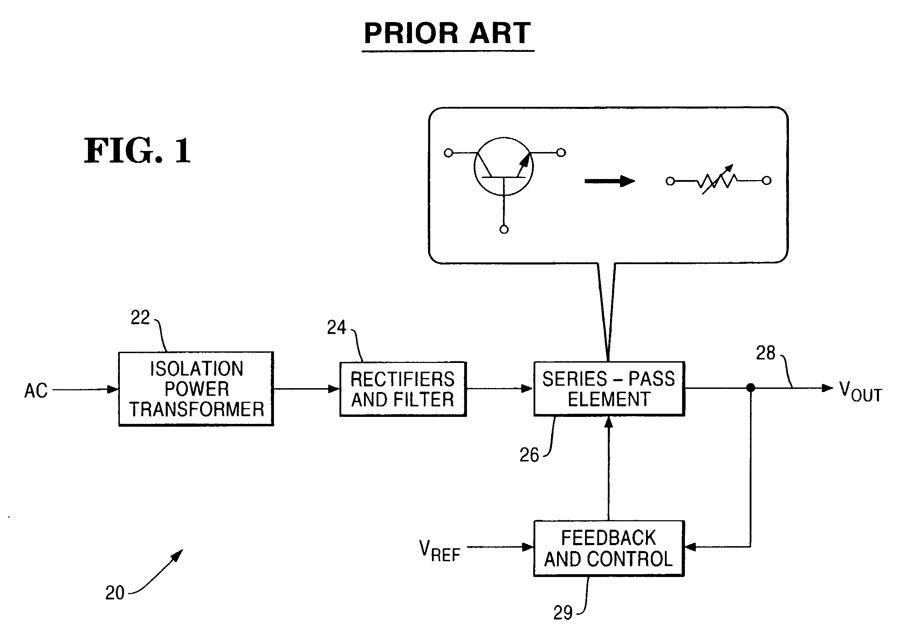

The reason for providing AC voltages by way of typical power outlets, such as a wall outlet, is that the only cost-effective way to convert an AC voltage to a DC voltage is by means of a linear power supply. Fig. 1 shows the basic block diagram of a linear power supply 20. An isolation transformer 22 serves two purposes. First it isolates the mains output from the system input in order to meet particular safety regulations. Second, it reduces the input voltage from a higher voltage (e.g. 110V) to a lower voltage (e.g. 5V). The reduced AC voltage is then rectified and filtered by rectifiers and filters 24 into a DC voltage. A series-pass element 26 regulates the output DC voltage by monitoring the loading at an output 28 by feedback and control means 29. A disadvantage of the linear power supply is that, due to the low AC input frequency (e.g. in the region of 60Hz), both the isolation transformer and the filter capacitors have to be relatively large. Furthermore, the power conversion efficiency of a linear power supply is only about 40 to 50%. It is also impractical to attempt to fit a linear power supply into a space which corresponds to the size of an AC mains wall outlet arrangement. Thus, due to the large size requirements, conversion from AC-to-DC voltages is typically done inside or within the device or system that requires the DC supply voltage.

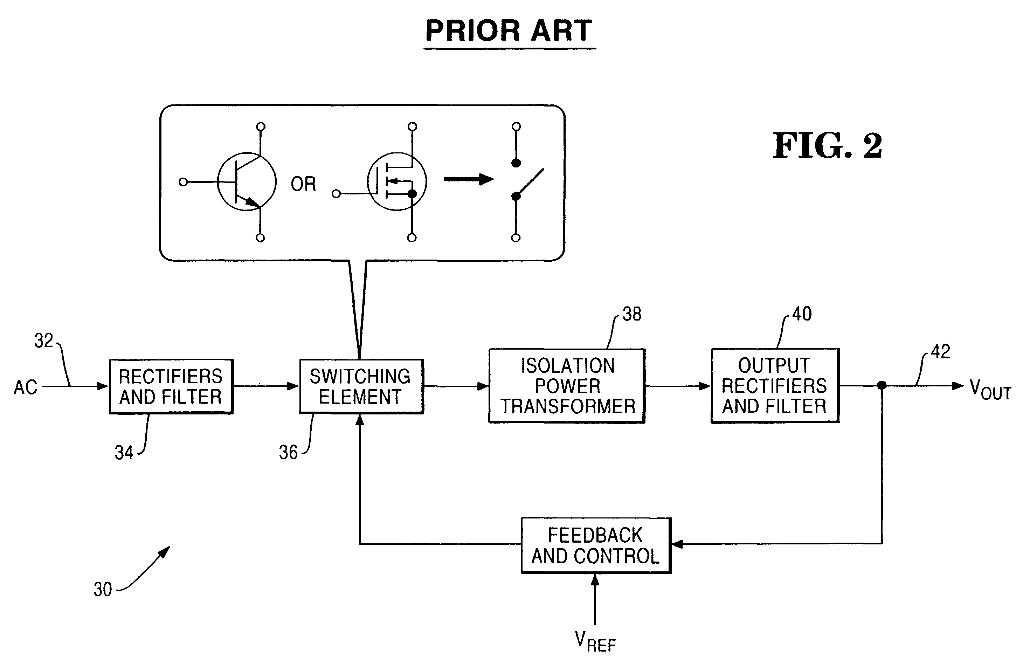

The progress of power semiconductor technology in recent years has made a new type of power supply potentially economically viable. Fig. 2 shows a block diagram of a so-called "switched mode power supply" (SMPS) or "Class D" power supply 30. In an SMPS, an AC input 32 is rectified and filtered by rectifiers and filters 34 into a DC voltage without passing through an isolation transformer. A switching element 36 (usually one or more power transistors) will chop the DC voltage into a very high frequency AC voltage (up to several hundred KHZ). This high frequency AC voltage is then fed to an isolation transformer 38 before being rectified and filtered again at rectifier and filters 40 to provide the output 42 of the power supply. Since the transformer and the output filter only have to deal with a very high frequency AC voltage, the size of the transformer and the filter capacitors can be relatively small. In addition, since the switch element usually dissipates very little power, the efficiency of an SMPS is usually about 70 to 80%.

However, the advent of SMPS has disadvantageously only resulted in reducing the size, weight, and cost of power supply arrangements provided inside, or within, the device requiring the DC supply voltage.

EP-A-0 409 226 discloses a socket for receiving an AC input and providing a DC output which can have a selected one of a plurality of values. The socket and associated method comprise features as set out in the preambles of claims 1 and 9.

The present invention seeks to provide a power supply outlet exhibiting advantages over known power supply outlets.

In accordance with one aspect of the present invention, there is provided an electrical power supply wall outlet device comprising at least one connector, means for converting an AC voltage to a DC voltage, means for providing a plurality of DC voltages and for selecting a particular one of said plurality of DC voltages for said at least one connector and means for receiving an insert member insertable to assist with connection to said at least one connector, CHARACTERISED IN THAT said insert member, when inserted in said wall outlet, serves to actuate a variable resistor offering a resistance dependent upon the length of the insert member, the resistance representing the desired DC voltage.

In accordance with another aspect of the present invention, there is provided a method of supplying at least one DC voltage by way of a wall outlet for receiving an AC voltage and for converting said AC voltage to a DC voltage within said outlet so as to provide said DC voltage from said wall outlet, comprising the step of inserting an insert member in said wall outlet to select a desired DC voltage, CHARACTERISED IN THAT the insert member is arranged to actuate a variable resistor to offer a resistance dependent upon the length of the insert member, the resistance representing the desired DC voltage.

The present invention is advantageous in providing for an improved power supply distribution technique and system.

The present invention can also provide for an improved AC-to-DC power supply conversion arrangement which can provide an improved method for powering devices which require DC supply voltages.

Further, the present invention is particularly advantageous in providing DC voltages within an electrical outlet and which can take the form of an integrated circuit device for converting AC voltages to DC voltages.

As will be appreciated, it is a particular preferred feature of the present invention that AC-to-DC voltages can be converted by a device attached to the normally inaccessible side of a wall outlet.

An AC-DC voltage conversion integrated circuit (IC) of the present design can integrate all the control and protection circuits, as well as the power transistors, into a single module. Passive components, such as the transformer and capacitors, are very small, as the switching frequency is in the KHz or MHz range. Including one or more integrated SMPS ICs in every wall outlet allows for providing a plurality of DC voltages from such outlets.

The present invention can also provide for an electrical power supply outlet having at least one housing means having a first portion for access by a device requiring a supply voltage and a second portion for providing a supply voltage, wherein said first and second portions are coupled together, and an AC to DC voltage converter circuit coupled to the second portion.

The invention is described further hereinafter, by way of example only, with reference to the accompanying drawings in which:
Fig. 3 is a schematic illustration of a switch mode power supply;
Fig. 4 is a block diagram of a partially integrated switched mode power supply (SMPS) integrated circuit device;
Fig. 5 illustrates the physical structure for the partially integrated SMPS integrated circuit device of Fig.4;
Fig. 6 illustrates the physical structure of a fully integrated SMPS;
Fig. 7 illustrates a switch for turning off an integrated SMPS;
Fig. 8 illustrates an integrated SMPS and switch for use as a power supply wall outlet;
Fig. 9 illustrates a power supply wall outlet with an interconnecting electrical jack;
Fig. 10 illustrates a wall outlet with an engaged interconnecting electrical jack;
Fig. 11 illustrates a DC voltage selection technique using a knob;
Figs. 12A-12B illustrate a DC voltage selection technique using different sizes and shapes of connectors and plugs;
Fig. 13 illustrates the generation of a plurality of DC voltages from an integrated SMPS;
Fig. 14 illustrates a technique for automatically selecting a DC voltage from a common receptacle;
Fig. 15 illustrates a combined AC and DC wall outlet;
Fig. 16 illustrates the internal wiring for supplying the combined outlet of Fig. 15 with both AC and DC voltages;
Fig. 17 illustrates a side view of a combined AC/DC outlet;
Fig. 18 illustrates a front view of a combined AC/DC outlet;
Fig. 19 illustrates a multiplexer/selector for coupling a specified DC voltage to a receptacle;
Fig. 20 illustrates a wall outlet with a common receptacle providing both AC and DC voltages;
Fig. 21 illustrates an alternative wall outlet with a common receptacle for providing both AC and DC voltages; and
Fig. 22 illustrates a plurality of plugs having different pin configurations for selecting which type of voltage (AC or DC) is provided by the receptacle of Fig. 21.

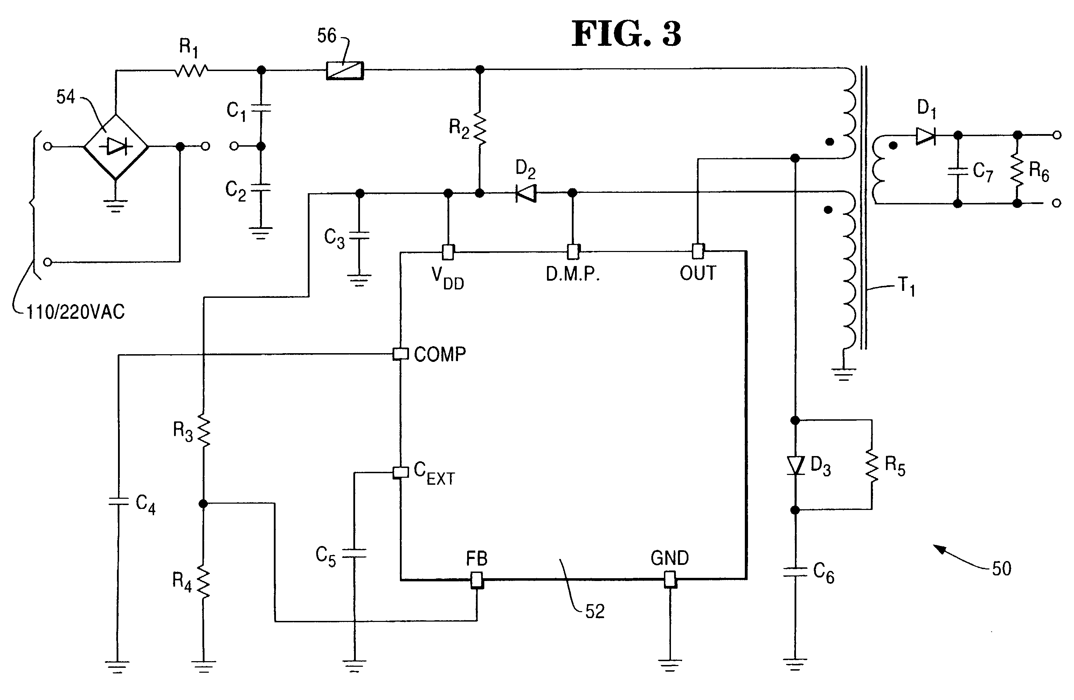

Fig. 3 shows an SMPS that can exhibit a very small form factor. The SMPS 50 comprises an SMPS integrated circuit device 52 (hereinafter SMPS IC) and a few passive components. The following design components provide a 10 KHz operation at 40 Watts. Element 54 is a full wave bridge rectifier, and preferably a Fagor silicon bridge rectifier, part number FBP04, which is available from Newark Electronics (4755 Paris Street, Denver Colorado 80239). Element 56 is a negative temperature coefficient thermistor, preferably a Keystone NTC thermistor, stock number 81F3390, also available from Newark Electronics. Transformer T1 is preferably a Magnetic Triad PC-Mount Flat Pack power transformer, stock number 46F1942 (for 5 volts DC output), also available from Newark Electronics. The remaining preferred component values for Fig. 3 are shown below in Table 1.

**TABLE 1**

| **DEVICE** | **VALUE** |
|---|---|
| **R1** | **5 ohms** |
| **R2** | **100K ohms** |
| **R3** | **40 K ohms** |
| **R4** | **60 K ohms** |
| **R5** | **10 K ohms** |
| **R6** | **1 M ohms** |
| **C1** | **60 uF** |
| **C2** | **60 uF** |
| **C3** | **10 uF** |
| **C4** | **10 uF** |
| **C5** | **1 uF** |
| **C6** | **100 uF** |
| **C7** | **100 uF** |
| **D1** | **400 V, 10A** |
| **D2** | **400 V, 10A** |
| **D3** | **400 V, 10A** |

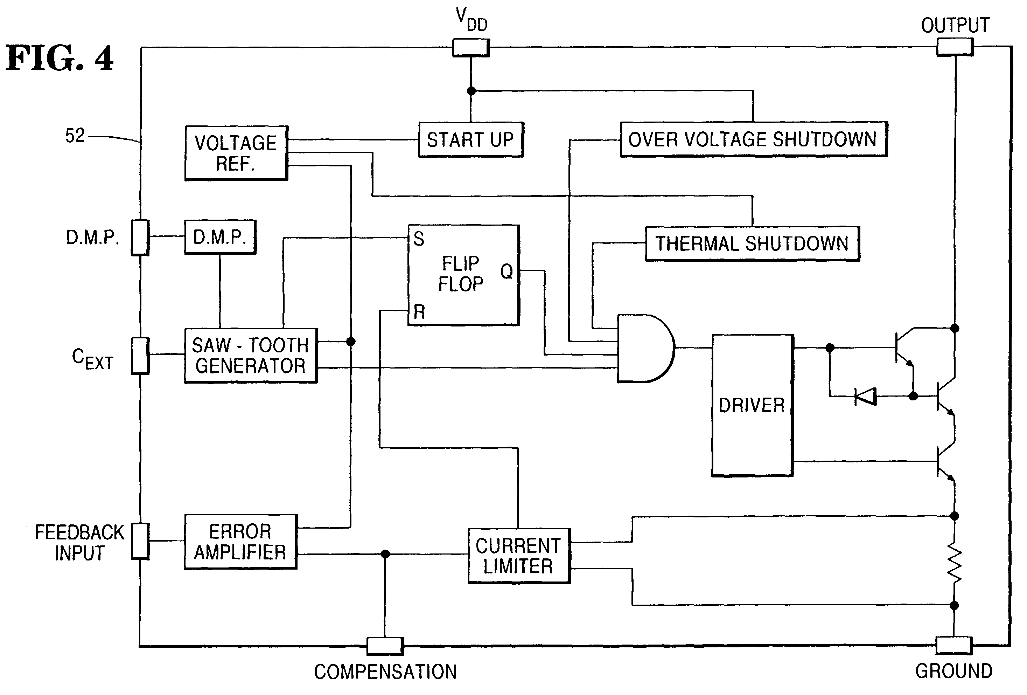

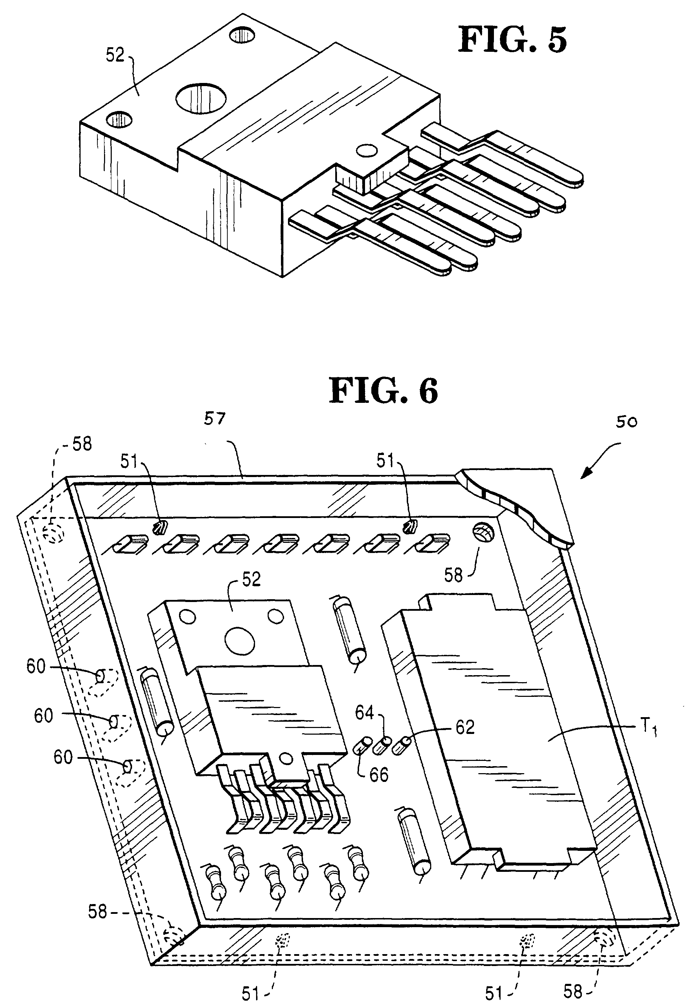

Fig. 4 is a block diagram for the SMPS IC device 52 of Fig. 3. The operation of the SMPS IC device 52 is known in the art, and is further described in "Power Semiconductor Devices and Circuits", by Andre A. Jaecklin, 1992, available from Plenum Press, New York. The physical shape of such SMPS IC is shown in Fig. 5.

A key feature of the present invention is that the passive components of Fig. 3 are included within a single integrated circuit device package for high switching frequency (MHz) applications. As shown in Fig. 6, the integrated SMPS (iSMPS) device 50 allows for inclusion of such device in a wall outlet that provides DC, or a combination of AC and/or DC, supply voltages.

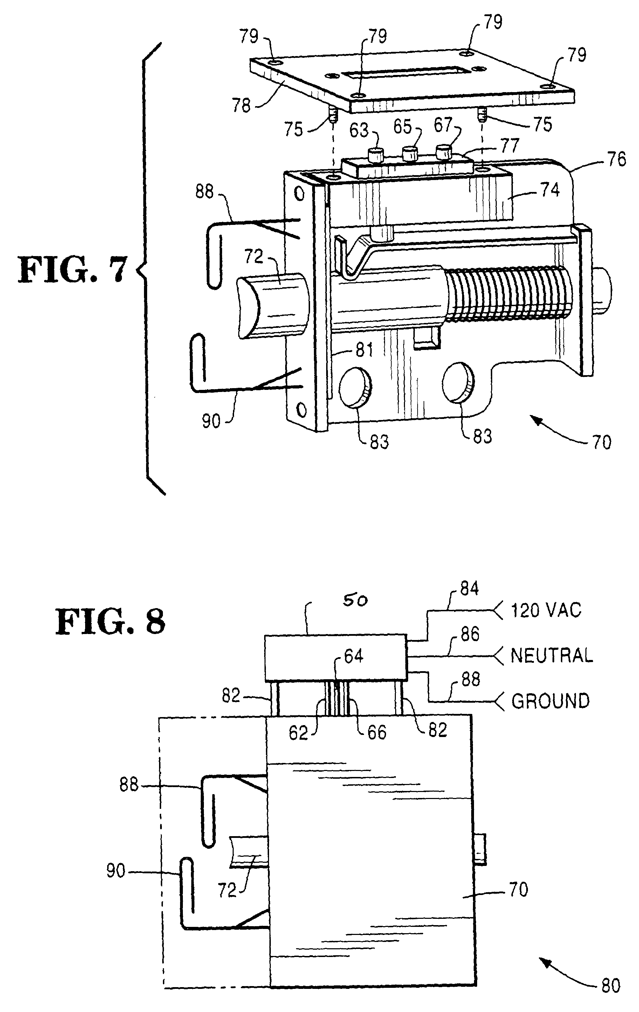

Referring now in detail to Fig. 6, the iSMPS 50 comprises the design depicted in Fig. 3. The component devices illustrated in Fig. 3 are mounted on a printed circuit card which is contained within a rectangular case 57. The devices could alternatively be mounted on a multichip module substrate. There are four mounting holes 58 used to attach the case 56 to a switch housing (later shown in Figs. 7 and 8). Three connector apertures 60 are provided to accept standard AC house wiring, such as 12-2 or 14-2 AWG wires. These connector apertures 60 are similar in function to those found in standard AC outlets, where the AC wires (after having had the insulation removed from the end thereof) are press-inserted therein, and locked into place. A quick release element (not shown) allows for removal of the AC wires for maintenance or other purposes. Three conductive posts 62, 64, and 66, centrally located on the printed circuit board and passing through the bottom surface of case 56, are provided for electrical connection to the switch illustrated with reference Fig. 8.

The above embodiments, techniques and arrangements allow for the design and implementation of DC-only or combined selective AC/DC wall outlets which can be the same size as currently available AC outlets. However, several differences are exhibited with the DC outlets with regard to the AC outlets. First of all, the AC outlets do not consume any power. The iSMPS IC will dissipate power even when the output is not loaded. It is desirable therefore to turn off the iSMPS when nothing is inserted in the wall outlet or socket. A particularly effective and simple way is to have an on/off switch associated with the outlet. A user can then turn off the iSMPS when power is not required from the outlets. A further feature is that the outlets can automatically turn off when not used. A particularly preferred way to eliminate power dissipation is to build an on/off switch into the connection port of the outlets themselves. When someone inserts a connector into the outlet, the plug will push the switch in and turn on the iSMPS. When the plug is removed, a spring in the outlet pushes the switch back to its original position and turns off the iSMPS. A switch of this type is shown in Fig. 7, with the overall system interconnectivity to such switch shown in Fig. 8.

Referring now to Fig. 7, a microswitch 74 and springloaded actuator arm 72 are mounted to a switch housing 76 to form a switch unit 70. When the actuator arm 72 is depressed, the microswitch 74 closes, shorting the normally open switch output to ground. When the actuator arm is released, the microswitch opens to its normally open position. The normally open switch output is coupled to the iSMPS (54 of Fig. 6) via connectors 65 (DC ground) and 67 (switch output), which receives iSMPS pins 64 and 66. A plate 78 is press-fit or otherwise physically secured (via screws or posts 75) around the outer perimeter of a block 77, and provides mounting support holes 79 for attaching an iSMPS device thereto.

As shown in Fig. 8, the iSMPS device 50 is mounted to the upper surface of the switch unit 70 (using mounting support holes 58 of Fig. 6 and 79 of Fig. 7). Hollow spacers 82 are provided and are arranged to have screws passing therethrough. The screws provide mechanical attachment of the case 57 to the switch unit 70. The screws also provide an AC ground to switch unit 70 (from the AC ground wire 86 via device 54), in order to conform to various safety requirements. The other electrical connection between the iSMPS 50 and switch 70 is provided by pins 62, 64 and 66, which are the DC output, DC ground, and switch output voltages, respectively, and which plug into connectors 63, 65 and 67 of Fig. 7. The connector 63 is electrically coupled, via a copper strip (not shown) within a switch extension 81 illustrated in Fig. 7, to a conductor 88. A connector 65 is electrically coupled, via a copper strip (not shown) within the switch extension 81 of Fig. 7, to a conductor 90. Thus, the wall outlet 80 can provide DC voltages to the conductors 88 and 90.

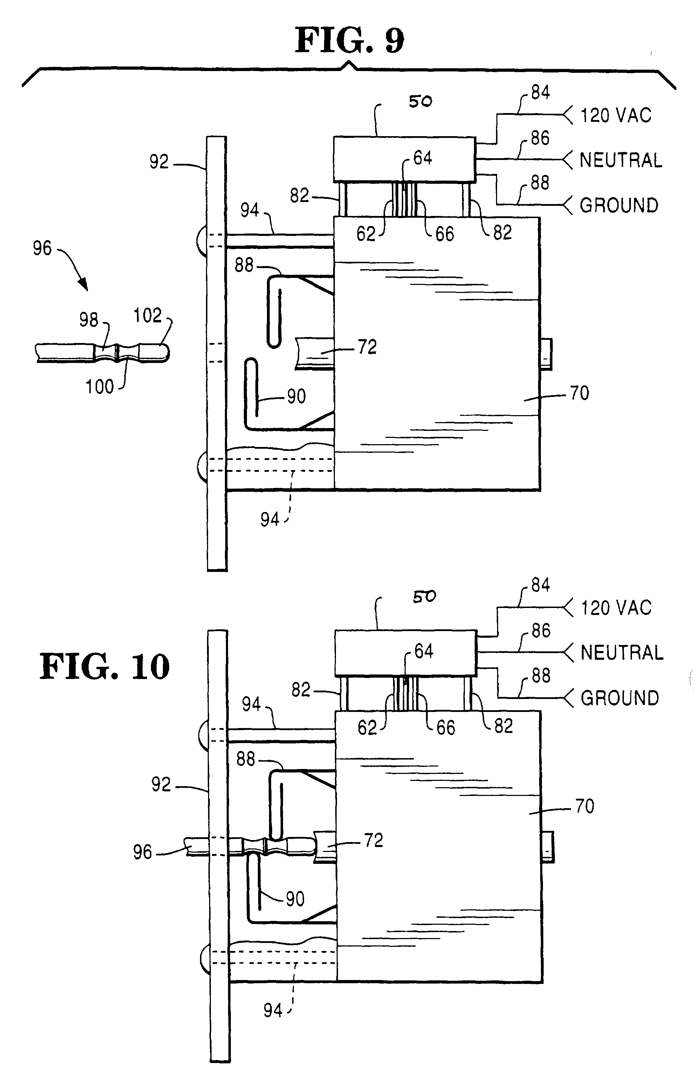

A face plate 92 is attached to the switch 70 of the wall outlet 80 by two screws 94, as shown in Fig. 9. The preferred order for initial construction of the assembly shown in Fig. 9 is to attach the switch 70 to the stud of a wall via the switch housing mounting holes (83 of Fig. 7), in a manner similar known techniques when mounting electrical boxes to studs. The iSMPS device 50 is then mounted on top of the switch 70. The wires 84, 86 and 88, which provide AC input voltages, are then connected to the iSMPS 50. After drywalling, or other exterior surfacing for the wall has been completed, the face plate 92 is attached to switch 70. Alternatively, the entire wall outlet 80 can be pre-assembled into a single mounting box, and this box can be then mechanically attached to a support structure (such as a stud), and electrically attached to an AC supply voltage.

In operation, an electrical jack 96 is inserted into the wall outlet 80 through the face plate 92. The jack 96 has two indented regions 98 and 100. When the jack is fully engaged into the switch, the conductors 88 and 90 are received, and preferably lock, into respective indented regions 100 and 98 of the jack 96. This locking provides for both a mechanical support, to hold the jack in the outlet, and an electrical connection between the conductors 88/90 and the jack 96. Also, upon insertion, the tip 102 of the jack 96 will depress the switch actuator 72. The switch output signal on the conductor 66 will short to ground, indicating that DC supply voltages should be supplied via the connecting posts 62 and 64 to the conductors 88 and 90. A jack when fully engaged in a wall outlet is shown in Fig. 10.

Another problem that arises with a mere DC outlet is the DC output voltage level. Different devices may require different voltage levels, and using a wrong voltage level may damage the device(s) and create safety hazards.

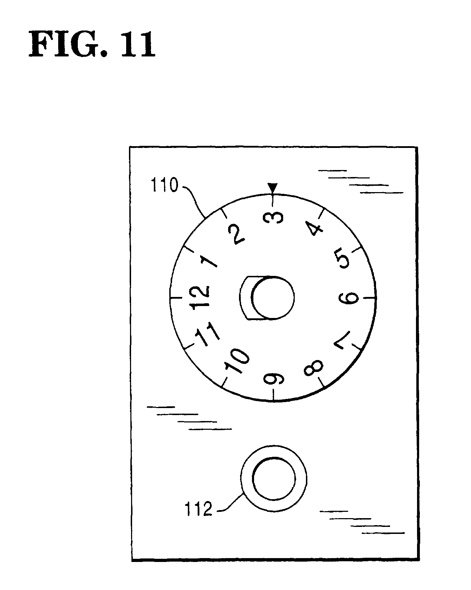

Such a problem can be overcome by including an adjustable output, as shown in Fig. 11. By turning a rotary control knob 110, a user can choose the voltage level within the output range. In the iSMPS, the output voltage is regulated by comparing the output voltage with a reference voltage. Therefore, by changing the reference voltage (through turning the knob 110), the output voltage level provided at the connector 112 can be readily adjusted.

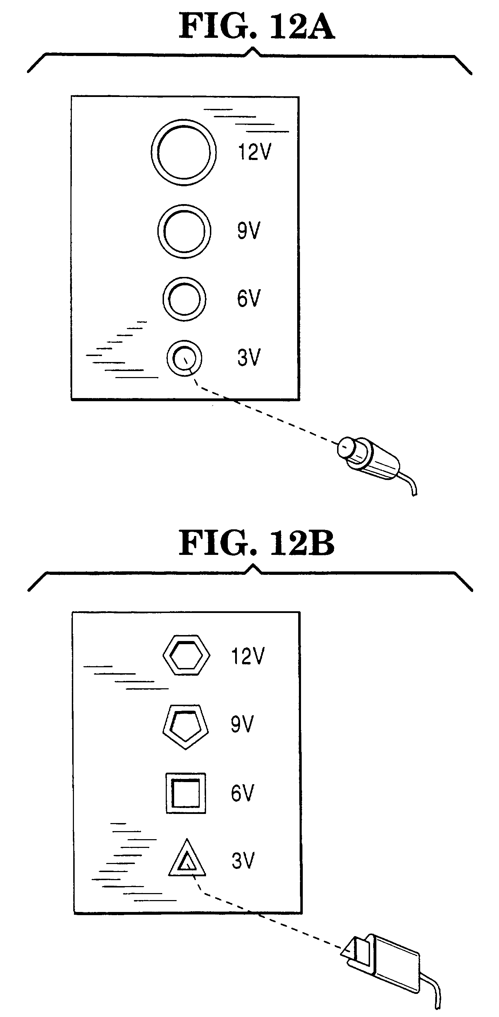

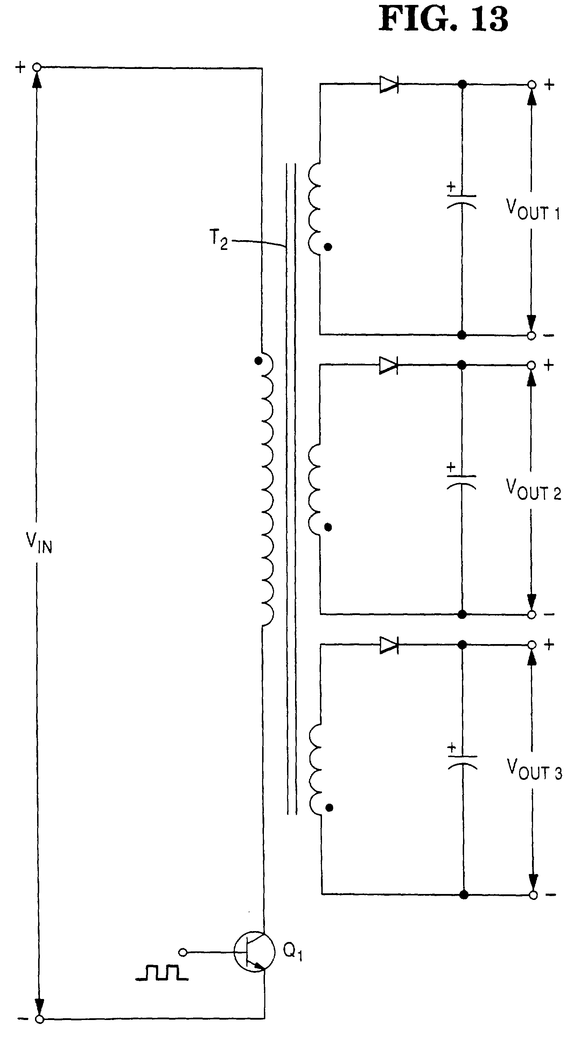

Although an adjustable outlet can give users the freedom of choosing the voltage level required, in many cases a user may either forget to adjust the outlet or simply will not know the correct voltage level for the device(s) they want to use. In view of this the invention provides DC outlets with a selection of fixed, and commonly used, standard voltage levels. To seek to ensure that users use the appropriate voltage level, in a manner not in accordance with the invention, the size, or shape, of the outlets can be arranged as a function of the voltage level, as shown in Figs. 12A-12B. It should be noted that a single SMPS can generate several different output voltages at the same time by having several different secondary windings in the isolation transformer. Fig. 13 shows how this can be implemented in the iSMPS. Switch 70 (Figs. 7-10) can also be modified to provide additional electrical interconnections, in a similar fashion to that as shown with reference to the pins 62,64,66, the connectors 63,65,76, and the conductors 88,90 to accommodate the additional voltages.

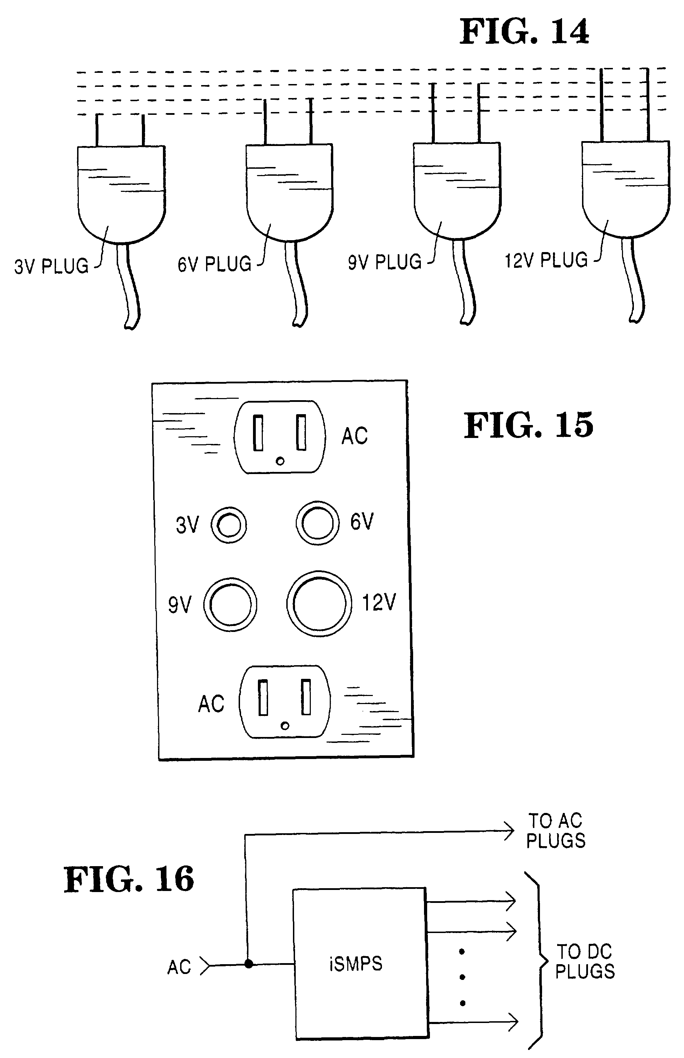

Alternatively, in accordance with the invention, the same concept of having a built-in switch in the port of the outlets can be applied. However, instead of having an on/off switch, there can be provided an incremental multi-position switch, or linear switch, which basically comprises a variable resistor whose resistance depends on how far it has been pushed in. Plugs with different lengths for different voltage levels are advantageously employed. As shown in Fig. 14, a 6V plug pushes the switch further into the outlets than the 3V plug. As a result, the resistance of the switch sets the output voltage to 6V. By doing so, the output voltage of the outlet can be set automatically by the device without manual adjustment. The wall outlet of Fig. 8 can be modified by replacing the on-off micro-switch 72 with such a linear switch. The output resistance presented on the switch output pin 66 now represents the desired DC voltage. This output resistance is used in a voltage divider, using standard techniques known in the art, to divide down, or reduce, a maximum possible DC voltage to the desired value.

In some instances, it will prove advantageous to be able to obtain both AC and DC output voltages from the same wall outlet unit. To accommodate this, the AC outlets can be combined with the DC outlets. Fig. 15 shows a unit with two AC outlets and four DC outlets. In a manner not in accordance with the invention, each DC outlet provides a different voltage level, using the voltage selection techniques previously described. Alternatively, the previously described linear switch (Fig. 14) or adjustment knob (Fig. 11) can be provided in relation to the DC outlets. For the adjustment knob(s), each of the four outlets can be adjusted independently but four iSMPS devices, or a device to disable other ports when one port is in use (as further described below) are required. The iSMPS input AC voltage is provided directly to the AC plugs, as in Fig. 16.

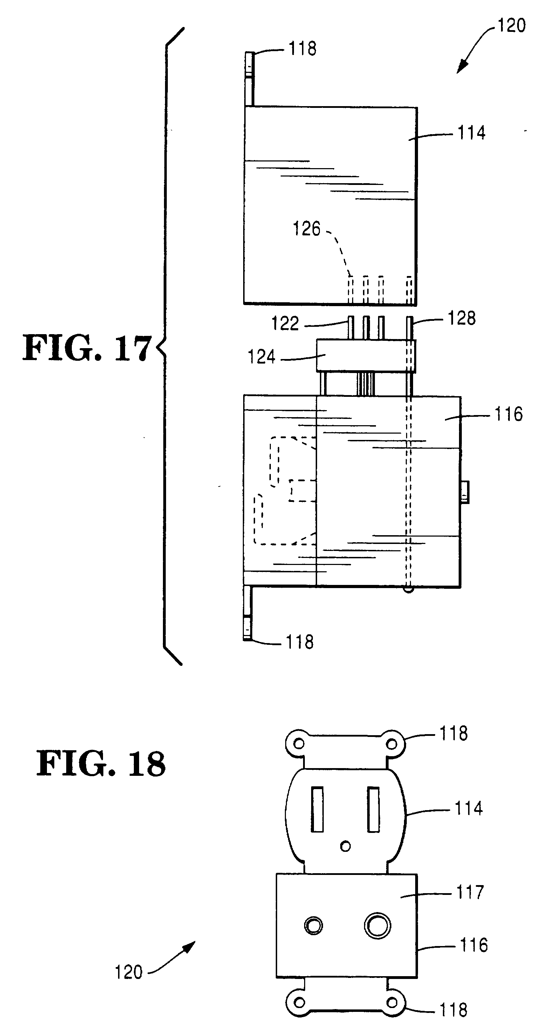

Fig. 17 illustrates the mechanical structure for such a combined AC/DC voltage supply source, and further exemplifies the flexibility of this modular approach. The upper portion of the outlet 120 comprises a traditional AC outlet 114, having a mounting structure 118. The lower portion 116 provides the DC voltages for the upper portion (i.e. the 3 volt and 6 volt) of the outlet shown in Fig. 15. Fig. 18 shows a front view of wall outlet 120. The lower portion 116 has a cover plate 117 similar to element 92 of Figs. 9 and 10. A similar device to that shown in Figs. 17 and 18 is used to provide the AC and DC voltages for the lower portion (i.e. the 9 volt and 12 volt) of the outlet shown in Fig. 15.

Continuing with Fig. 17, a DC wall outlet 116 has been modified from that shown at 80 in Fig. 8 to include AC connector pins 122 on the upper surface of the iSMPS device 124. These AC connector pins plug into receptacles 126 on the lower surface of AC outlet 114, in order to directly supply AC voltage to such AC outlet. The device 116 is mechanically attached to AC outlet 114 by one or more screws 128.

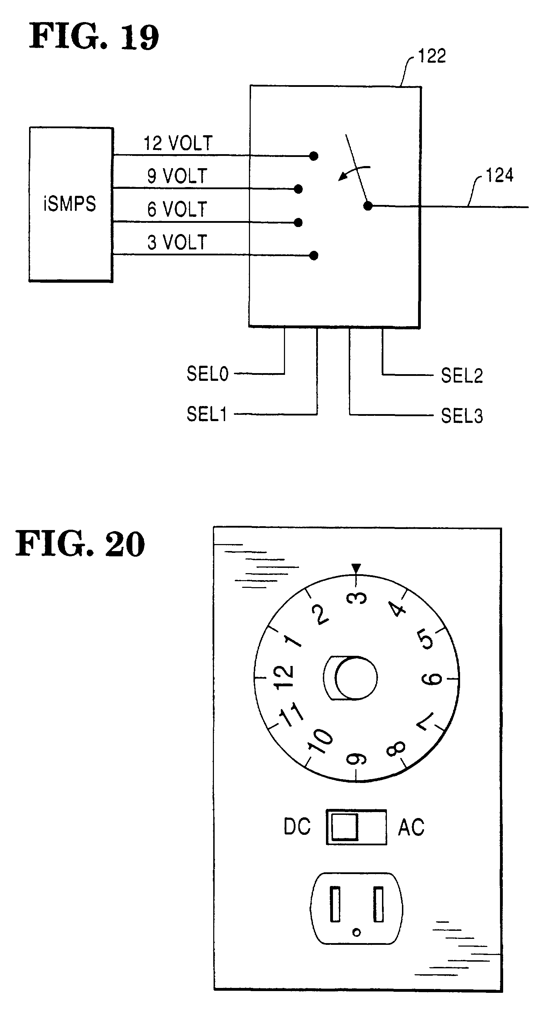

Fig. 19 shows how to disable all but one port when a single iSMPS device is used with a plurality of DC outlets. The iSMPS device provides four DC output voltages, using techniques as previously described with respect to Fig. 13. These DC voltages are coupled to a multiplexer or cross-bar 122. The multiplexer selectively couples one of the input voltages (3, 6, 9 and 12 volts) to its output terminal 124, based upon the select values SEL0-SEL3. These select values are either +5 volts or ground, depending on whether a jack is plugged into a respective input terminal. If more than one jack is plugged in (i.e. its select line tied to ground), the multiplexer provides the highest voltage requested. A truth table for the multiplexer 122 is shown below in Table 2.

**TABLE 2**

| SEL0 | SEL1 | SEL2 | SEL3 | | 3V | 6V | 9V | 12V |
|---|---|---|---|---|---|---|---|---|
| 0 | 0 | 0 | 0 | | NO | NO | NO | YES |
| 0 | 0 | 0 | 1 | | NO | NO | YES | NO |
| 0 | 0 | 1 | 0 | | NO | NO | NO | YES |
| 0 | 0 | 1 | 1 | | NO | YES | NO | NO |
| 0 | 1 | 0 | 0 | | NO | NO | NO | YES |
| 0 | 1 | 0 | 1 | | NO | NO | YES | NO |
| 0 | 1 | 1 | 0 | | NO | NO | NO | YES |
| 0 | 1 | 1 | 1 | | YES | NO | NO | NO |
| 1 | 0 | 0 | 0 | | NO | NO | NO | YES |
| 1 | 0 | 0 | 1 | | NO | NO | YES | NO |
| 1 | 0 | 1 | 0 | | NO | NO | NO | YES |
| 1 | 0 | 1 | 1 | | NO | YES | NO | NO |
| 1 | 1 | 0 | 0 | | NO | NO | NO | YES |
| 1 | 1 | 0 | 1 | | NO | NO | YES | NO |
| 1 | 1 | 1 | 0 | | NO | NO | NO | YES |
| 1 | 1 | 1 | 1 | | NO | NO | NO | NO |

Select line 0 (SEL0) corresponds to the 3 volt plug, Select line 1 corresponds to the 6 volt plug, Select Line 2 (SEL2) corresponds to the 9 volt plug, and Select Line 3 (SEL3) corresponds to the 12 volt plug. A logical ZERO (0 volts) means a jack is plugged into the respective plug, whereas a logical ONE (+5 volts) means no jack is plugged into the respective plug. A 'yes' in the output column means the corresponding multiplexer/selector's input voltage is coupled to the output 124.

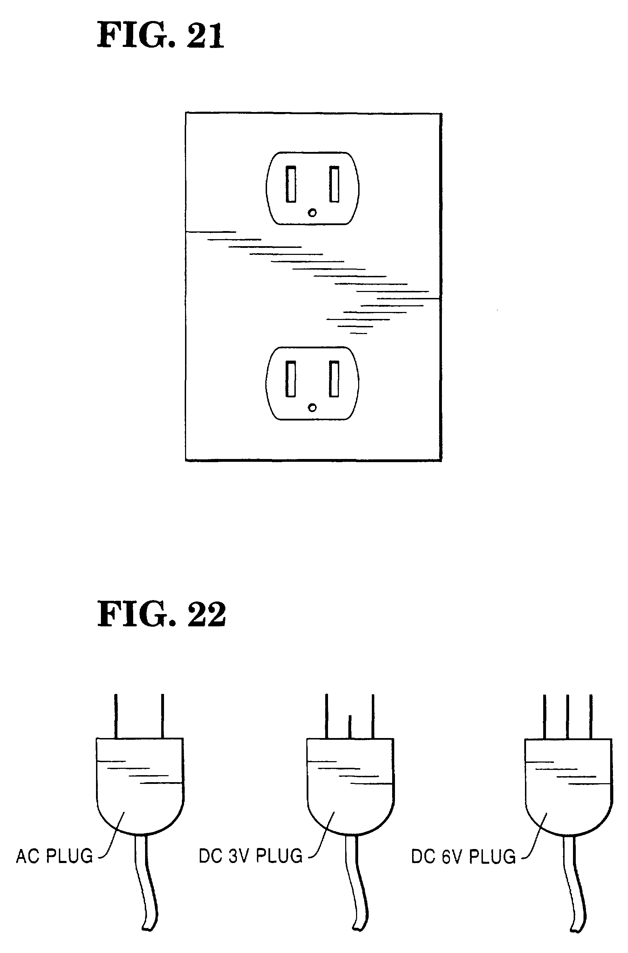

It is also possible that users may want to use the same port for either AC or DC output. A simple solution is to have a switch which can choose between AC and DC output and a knob to adjust the voltage level if DC is chosen, as shown in Fig. 20. However, a safer and more elegant solution is to use a slightly different plug for DC applications. As shown in Fig. 21, each outlet has three slots instead of two. A default setting for the outlet is that an AC output is provided. When a DC plug with an extra leg is plugged into the outlet, as shown in Fig. 22, the extra leg will turn on the SMPS and switch the outlet to the DC mode. In accordance with the invention, the length of the leg determines the DC output voltage level automatically, as previously described. If an AC plug having a third ground leg needs to be accommodated, then a fourth slot is added to the outlet of Fig. 21. This fourth slot would receive the extra DC leg just described.

While embodiments of the invention have been illustrated and described above, it is to be understood that the invention is not restricted to the detail of the foregoing embodiments.

## Claims

1. An electrical power supply wall outlet device (50) comprising at least one connector (62, 64, 66), means (52, 54) for converting an AC voltage to a DC voltage. means for providing a plurality of DC voltages and for selecting a particular one of said plurality of DC voltages for said at least one connector (62, 64, 66) and means for receiving an insert member insertable to assist with connection to said at least one connector (62, 64, 66), **CHARACTERISED IN THAT** said insert member, when inserted in said wall outlet, serves to actuate a variable resistor offering a resistance dependent upon the length of the insert member, the resistance representing the desired DC voltage.

2. A device as claimed in Claim 1, and including enabling means for controlling operation of said means for converting said AC voltage to said DC voltage.

3. A device as claimed in Claim 2, wherein said enabling means comprises switch means arranged to be operated by insertion of an insert member (96) into said device to assist with the connection to said connector.

4. A device as claimed in any one of the preceding claims, and further comprising at least one AC connector for providing an AC voltage output.

5. A device as claimed in Claim 4, further comprising selection means for selectively coupling either said AC voltage or said DC voltage to said at least one connector (62, 64, 66).

6. A device as claimed in Claim 5, wherein said selection means is arranged to be operated by insert means associated with an electrical connector to be received by said outlet.

7. A device as claimed in any one of the preceding claims, wherein said means for converting said AC voltage comprises a single module.

8. A device as claimed in Claim 7, wherein said module integrates all control and protection circuits and power transistors and includes a plurality of integrated switched mode power supply devices for providing at least one of a plurality of DC voltages.

9. A method of supplying at least one DC voltage by way of a wall outlet for receiving an AC voltage and for converting said AC voltage to a DC voltage within said outlet so as to provide said DC voltage from said wall outlet, comprising the step of inserting an insert member in said wall outlet to select a desired DC voltage, **CHARACTERISED IN THAT** the insert member is arranged to actuate a variable resistor to offer a resistance dependent upon the length of the insert member, the resistance representing the desired DC voltage.

10. A method as claimed in Claim 9, wherein said AC voltage is converted by way of a single module comprising an integrated circuit device,

## Patentansprüche

1. Wandsteckdosenvorrichtung (50) für elektrischen Strom, umfassend wenigstens einen Verbinder (62, 64, 66), ein Mittel (52, 54) zum Umwandeln einer Wechselspannung in eine Gleichspannung, ein Mittel zum Bereitstellen einer Mehrzahl von Gleichspannungen und zum Auswählen einer bestimmten aus der genannten Mehrzahl von Gleichspannungen für den genannten wenigstens einen Verbinder (62, 64, 66) sowie ein Mittel zum Aufnehmen eines Einsteckelementes, das eingesteckt werden kann, um beim Anschließen an den genannten wenigstens einen Verbinder (62, 64, 66) zu assistieren, **dadurch gekennzeichnet, dass** das genannte Einsteckelement, wenn es in der genannten Wandsteckdose eingesteckt ist, die Aufgabe hat, einen Stellwiderstand zu aktivieren, der einen Widerstandswert in Abhängigkeit von der Länge des Einsteckelementes bietet, wobei der Widerstandswert die gewünschte Gleichspannung repräsentiert.

2. Vorrichtung nach Anspruch 1 mit einem Freigabemittel zum Steuern des Betriebs des genannten Mittels um Umwandeln der genannten Wechselspannung in die genannte Gleichspannung.

3. Vorrichtung nach Anspruch 2, bei der das genannte Freigabemittel ein Umschaltmittel umfasst, das durch Einstecken eines Einsteckelementes (96) in die genannte Vorrichtung betätigt wird, um beim Anschließen an den genannten Verbinder zu assistieren.

4. Vorrichtung nach einem der vorherigen Ansprüche, ferner umfassend wenigstens einen Wechselstromverbinder zur Bereitstellung eines Wechselspannungsausgangs.

5. Vorrichtung nach Anspruch 4, ferner umfassend ein Auswahlmittel zum selektiven Koppeln der genannten Wechselspannung oder der genannten Gleichspannung mit dem genannten wenigstens einen Verbinder (62, 64, 66).

6. Vorrichtung nach Anspruch 5, bei der das genannte Auswahlmittel so gestaltet ist, dass es vom Einsteckmittel in Verbindung mit einem elektrischen Verbinder betätigt wird, der von der genannten Steckdose aufgenommen wird.

7. Vorrichtung nach einem der vorherigen Ansprüche, bei der das genannte Mittel zum Umwandeln der genannten Wechselspannung ein einzelnes Modul umfasst.

8. Vorrichtung nach Anspruch 7, bei der das genannte Modul alle Steuer- und Schutzschaltungen sowie Leistungstransistoren integriert und eine Mehrzahl von integrierten Schaltnetzvorrichtungen zur Bereitstellung von wenigstens einer aus einer Mehrzahl von Gleichspannungen bereitstellt.

9. Verfahren zum Zuführen von wenigstens einer Gleichspannung über eine Wandsteckdose zum Empfangen einer Wechselspannung und zum Umwandeln der genannten Wechselspannung in eine Gleichspannung in der genannten Steckdose, um die genannte Gleichspannung von der genannten Wandsteckdose zu gewinnen, umfassend den Schritt des Einsteckens eines Einsteckelementes in die genannte Wandsteckdose, um eine gewünschte Gleichspannung zu wählen, **dadurch gekennzeichnet, dass** das Einsteckelement die Aufgabe hat, einen Stellwiderstand zu aktivieren, der einen Widerstandswert in Abhängigkeit von der Länge des Einsteckelementes bietet, wobei der Widerstandswert die gewünschte Gleichspannung repräsentiert.

10. Verfahren nach Anspruch 9, bei dem die genannte Wechselspannung mit Hilfe eines einzelnen Moduls umgewandelt wird, das ein integriertes Schaltungsbauelement umfasst.

## Revendications

1. Dispositif de prise murale d'alimentation électrique (50) comprenant au moins un connecteur (62, 64, 66), un moyen (52, 54) pour convertir un courant CA en un courant CC, un moyen pour fournir une pluralité de tensions en CC et pour sélectionner l'une particulière de ladite pluralité de tensions en CC pour ledit au moins un connecteur (62, 64, 66) et un moyen pour recevoir un membre d'insertion insérable pour aider la connexion dudit au moins un connecteur (62, 64, 66), **caractérisé en ce que** ledit membre d'insertion, lorsqu'inséré dans ladite prise murale, sert à actionner une résistance variable offrant une résistance dépendante de la longueur du membre d'insertion, la résistance représentant la tension en CC désirée.

2. Dispositif tel que revendiqué dans la revendication 1, et incluant un moyen de validation pour contrôler le fonctionnement dudit moyen pour convertir ladite tension en CA en ladite tension en CC.

3. Dispositif tel que revendiqué dans la revendication 2, dans lequel ledit moyen de validation comprend un moyen de commutation arrangé pour être actionné par l'insertion d'un membre d'insertion (96) dans ledit dispositif pour aider la connexion audit connecteur.

4. Dispositif tel que revendiqué dans l'une quelconque des revendications précédentes, et comprenant en outre au moins un connecteur CA pour fournir une sortie de tension en CA.

5. Dispositif tel que revendiqué dans la revendication 4, comprenant en outre un moyen de sélection pour coupler sélectivement soit ladite tension en CA soit ladite tension en CC audit au moins un connecteur (62, 64, 66).

6. Dispositif tel que revendiqué dans la revendication 5, dans lequel ledit moyen de sélection est arrangé pour être actionné par un moyen d'insertion associé à un connecteur électrique devant être reçu par ladite prise.

7. Dispositif tel que revendiqué dans l'une quelconque des revendications précédentes, dans lequel ledit moyen pour convertir ladite tension en CA comprend un seul module.

8. Dispositif tel que revendiqué dans la revendication 7, dans lequel ledit module intègre tous les circuits de contrôle et de protection et transistors de puissance et inclut une pluralité de dispositifs intégrés d'alimentation à découpage pour fournir au moins l'une d'une pluralité de tensions en CC.

9. Méthode pour fournir au moins une tension en CC au moyen d'une prise murale pour recevoir une tension en CA et pour convertir ladite tension en CA en une tension en CC dans ladite prise de manière à fournir ladite tension en CC de ladite prise, comprenant l'étape consistant à insérer un membre d'insertion dans ladite prise murale afin de sélectionner une tension en CC désirée, **caractérisée en ce que** le membre d'insertion est arrangé pour actionner une résistance variable afin d'offrir une résistance dépendante de la longueur du membre d'insertion, la résistance représentant la tension en CC désirée.

10. Méthode telle que revendiquée dans la revendication 9, dans laquelle ladite tension en CA est convertie au moyen d'un seul module comprenant un dispositif à circuits intégrés.
